# EUROPEAN PATENT APPLICATION

(11) **EP 1 967 943 A2**
(43) Date of publication of application: **10.09.2008**
(21) Application number: 07018350.4
(22) Date of filing: 19.09.2007
(51) Int. Cl.: G06F 3/042

(54) **Optical pointing device for mobile terminals**

(30) Priority: 08.03.2007 KR 20070022709; 08.03.2007 KR 20070022711; 18.04.2007 KR 20070037930
(71) Applicant: Crucialtec Co., Ltd., Baebang-Myun Asan-Si Ch'ungch'ong namdo 336-795 (KR)
(72) Inventor: Ahn, Keon, Joon, Seongnam-Si Gyeonggi-Do (KR); Bae, Jae, Hun, Yongin-Si Gyeonggi-Do (KR); Kim, Jae, Dong, Seoul (KR); Yoon, Jung, Hyun, Yeongtong-Gu, Suwon-Si, Gyenggi-Do 443-270 (KR); Lee, Kwang, Han, Anseong-Si Gyeonggi-Do (KR)
(74) Representative: Sparing Röhl Henseler Patentanwälte European Patent Attorneys

(57) **Abstract**

The present invention relates to an optical pointing device for mobile terminals, which can improve assembly efficiency and stability.
An optical pointing device according to the present invention includes a holder (10) having an accommodation opening (12) therein. Light emitting means is installed in the accommodation opening (12) of the holder (10). A condensing element (30) includes a pair of prisms (35) installed in the accommodation opening (12) of the holder (10) and integrated into a single structure so as to condense light emitted from the light emitting means, and a condensing lens (40) disposed between the paired prisms (35). An image sensor captures light provided through the condensing element (30) and calculates the captured light as displacement values. The condensing element (30) includes a lens holder (45) coupled to the condensing lens (40) so as to maintain stable installation of the condensing lens (40) between the paired prisms (35).

## Description

The present invention relates to an optical pointing device for mobile terminals, which has improved assembly efficiency and stability.

Generally, personal mobile terminals, such as mobile phones or Personal Digital Assistants (PDAs), each employ a user interface using a keypad, and each include a keypad provided with a plurality of buttons used to enter numbers and characters and a plurality of direction buttons.

Recently, with the commercialization of wireless Internet service, such as Wireless Broadband (WIBRO) service, a Windows Operating System (OS), which supports a Graphic User Interface (GUI), has even been used in personal mobile terminals.

Further, with the development of technology, personal portable terminals can provide various types of supplementary services. For the convenient operation of various types of supplementary services, a Windows OS supporting a GUI has occasionally been used.

As described above, because a GUI OS is used as a user interface for personal mobile terminals, and the development of input devices suitable for personal mobile terminals is required, a touch key, a joystick, and an optical pointing device are used as input devices for mobile terminals, which improve on a single input scheme such as a keypad, on the display screen of each mobile terminal.

Of the input devices, an optical pointing device can provide an ultra-slim shape to realize better operability than other input devices and to enable the optical pointing device to be mounted in a slim mobile terminal.

An example of the prior art related to optical pointing devices is disclosed in Korean Patent Registration No. 10-0636412, which was filed by the present applicant and registered as a Korean patent, and which is entitled "Ultra-Thin Optical Joystick and Personal Portable Device Having an Ultra-Thin Optical Joystick". The above patent provides an optical pointing device capable of changing the optical path of light, reflected from an appendage in a vertical direction, to a horizontal direction, thus sufficiently realizing a very small thickness and adequate depth of focus.

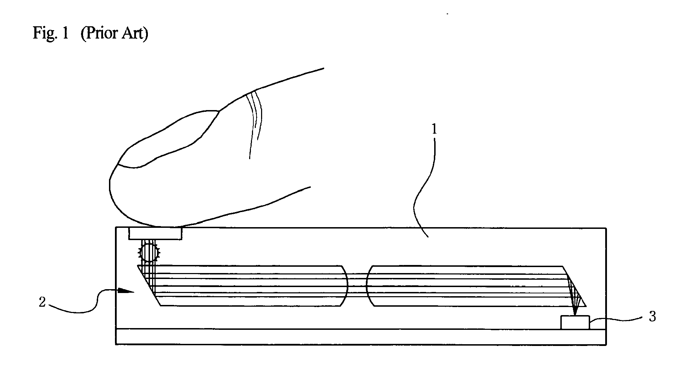

As shown in FIG. 1, the optical pointing device is constructed so that a condensing element 2 is installed in a holder 1, and an image sensor 3 is disposed below the condensing element 2, thus enabling the image sensor 3 to sense light reflected from the condensing element 2.

The image sensor captures light while sensing the amount of light, calculates the light into as displacement values, and transmits the displacement values to the microcomputer (not shown) of a mobile terminal.

However, the optical pointing device, constructed in this way, is problematic in that, since the stable installation of the condensing element cannot be maintained when the condensing element is installed in the holder, the condensing element may be easily detached from the holder, and may move freely within the holder when external impacts are applied.

That is, the condensing element is composed of a pair of lenses installed opposite each other to refract light so that the direction of the optical path of light is changed from a vertical direction to a horizontal direction. Such lenses are arranged opposite each other so as to change the optical path. Therefore, in the case of a lens having a small surface coming into contact with the holder, there is a problem in that the lens may be easily detached from the holder when external impacts are applied.

Further, when the condensing lens is installed in the holder, it must be installed using a separate tool, such as a pair of tweezers, because the size of the condensing lens is very small. However, since the small-sized condensing lens has rounded edges and a relatively smooth surface, it is very inconvenient to install the condensing lens in the holder even using a separate tool.

Further, on each of the condensing lenses forming a pair, an inclined surface is formed to vertically refract light that is emitted from a light emitting means, is reflected from an appendage, and is incident thereon. However, of the paired condensing lenses, a condensing lens that is close to the appendage has a smaller surface in contact with the inside of the holder than a condensing lens that is far away from the appendage, so that, when external impacts are applied to the optical pointing device, the former easily moves within the holder, and is thus optically defocused.

Accordingly, the present invention has been made keeping in mind the above problems occurring in the prior art, and an object of the present invention is to provide an optical pointing device for mobile terminals, in which the assembly structure of a condensing element for condensing light is improved, thus maintaining the secure arrangement of the condensing element even when external impacts are applied thereto.

Another object of the present invention is to provide an optical pointing device, which allows a condensing lens to be easily installed while a user holds the condensing lens more conveniently, thus greatly improving the work efficiency and assembly efficiency thereof.

A further object of the present invention is to provide an optical pointing device for mobile terminals, which allows a condensing element to be installed in a holder together with a stop holder, thus not only improving the efficiency of the work of installing the condensing element, but also greatly improving the stability and durability of the condensing element installed in the holder.

Yet another object of the present invention is to provide an optical pointing device for mobile terminals, which can ensure the stable installation of a condensing lens by increasing the contact area of the condensing lens.

In order to accomplish the above objects, the present invention provides an optical pointing device for mobile terminals, comprising a holder having an accommodation opening therein; light emitting means installed in the accommodation opening of the holder; a condensing element including a pair of prisms installed in the accommodation opening of the holder and integrated into a single structure so as to condense light emitted from the light emitting means, and a condensing lens disposed between the paired prisms; and an image sensor for capturing light provided through the condensing element and calculating the captured light as displacement values, wherein the condensing element includes a lens holder coupled to the condensing lens so as to maintain stable installation of the condensing lens between the paired prisms.

The above and other objects, features and other advantages of the present invention will be more clearly understood from the following detailed description taken in conjunction with the accompanying drawings, in which:
FIG. 1 is a sectional view of a conventional optical pointing device installed in a mobile terminal;
FIG. 2 is an exploded perspective view of an optical pointing device according to an embodiment of the present invention;
FIG. 3 is a sectional view of FIG. 2;
FIG. 4 is an exploded perspective view showing the state in which a condensing element is detached from a stop holder, in the construction of an optical pointing device according to another embodiment of the present invention;
FIG. 5 is a perspective view showing the state in which the condensing element and the stop holder of FIG. 4 are installed in a holder;
FIG. 6 is a perspective view in which part of FIG. 5 is cut away;
FIG. 7 is a schematic sectional view of an optical pointing device according to another embodiment of the present invention;
FIG. 8 is a schematic sectional view of an optical pointing device according to a further embodiment of the present invention; and
FIGS. 9 to 13 are views showing various embodiments of a condensing lens.

### <First embodiment>

Hereinafter, an embodiment of the present invention will be described in detail with reference to the attached drawings.

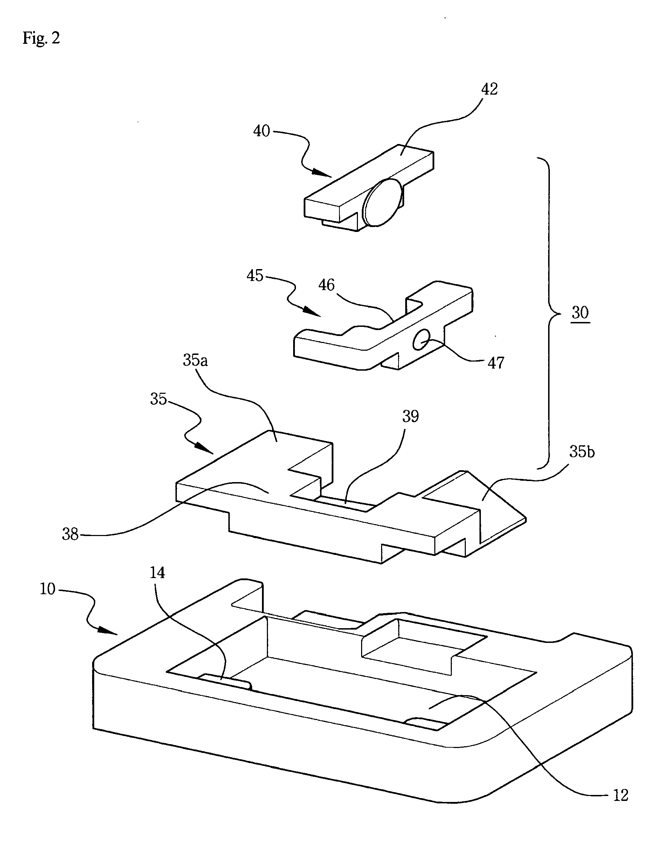

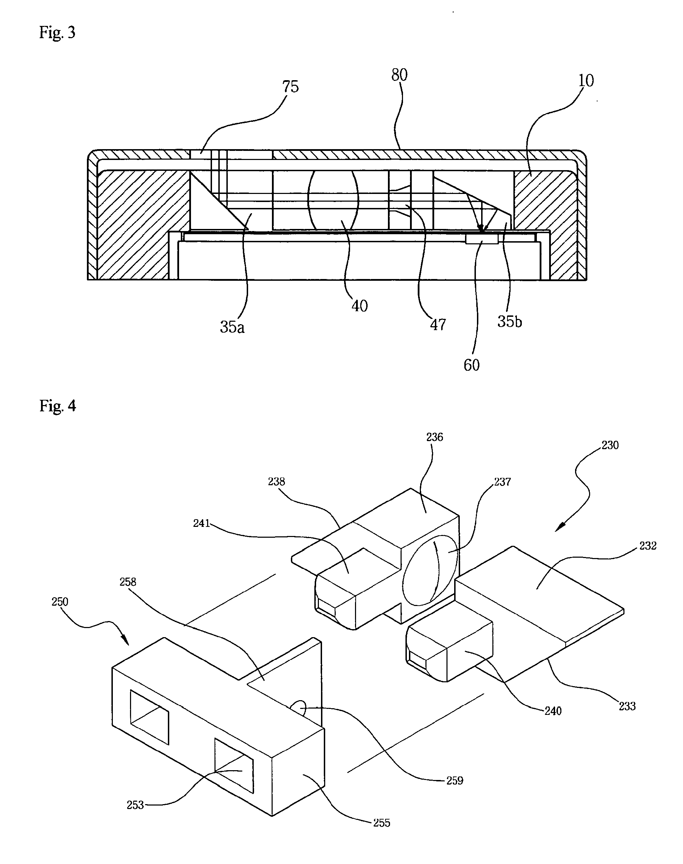

FIG. 2 is an exploded perspective view of an optical pointing device according to an embodiment of the present invention, and FIG. 3 is a sectional view showing the operation of the optical pointing device according to the present invention.

As shown in FIGS. 2 and 3, the optical pointing device for mobile terminals according to the embodiment of the present invention includes a holder 10, a light emitting means (not shown) installed in the holder 10, a condensing means 30 for collecting light emitted from the light emitting means, and an image sensor 60 for calculating information provided by the condensing element 30 as displacement value information.

The holder 10 is formed by injection molding of transparent or opaque synthetic resin material, and is provided with an accommodation opening 12, having a predetermined size, formed in the center portion thereof through the holder 10.

At the accommodation opening 12, stop protrusions 14 are formed to maintain the stable installation of the light emitting means and the condensing element 30 while preventing them from being detached from the holder 10.

The stop protrusions 14 can be formed to protrude a certain length from the inner wall of the accommodation opening 12, and can be implemented in the form of flanges or a plurality of separate protrusions.

The light emitting means installed in the holder 10 is preferably implemented using an LED. However, the light emitting means is not necessarily limited to such an LED.

Further, the condensing element 30 installed in the holder 10 includes a pair of prisms 35 and a condensing lens 40.

The condensing element 30 is manufactured by injection molding of transparent synthetic resin, and the prisms 35, forming a pair, are spaced apart from each other by a predetermined distance and are integrated into a single structure through a hanger flange 38.

The hanger flange 38 can be formed to be integrated on either or both of the paired prisms 35, and has a lens seating depression 39 formed in the center portion thereof.

The paired prisms 35 can be formed to have triangular sections, as shown in the drawings, but can alternatively be modified to have any section other than a triangular section, as long as the section can change an optical path from a vertical path to a horizontal path.

The paired prisms 35 according to the present invention have the same shape and have downwardly inclined surfaces that face away from each other, but are differently arranged, with one having the section of an inverted triangle 35a and the remaining one having the section of a triangle 35b, thus refracting vertical light in a horizontal direction. This structure is adapted to enable the optical pointing device installed in a mobile terminal to be implemented in a slim structure.

The condensing lens 40 for condensing light, which has been incident in a vertical direction and refracted in a horizontal direction, is disposed between the paired prisms 35.

A convex lens can be used as the condensing lens 40 to minimize the dispersion of light, and flanges 42 are formed to protrude from opposite sides of the circumference of the convex lens in order to maintain stable installation.

The flanges 42 of the condensing lens are coupled to the lens seating depression 39 of the hanger flange to integrate the paired prisms 35 into a single structure. When the flanges 42 of the condensing lens are seated in the lens seating depression 39 of the hanger flange in this way, the center of the condensing lens is arranged to be collinear with the center of the paired prisms 35.

In this embodiment, as means for installing the condensing lens 40 between the paired prisms 35, the flanges 42 are formed on the circumference of the condensing lens 40 and the lens seating depression 39 is formed in the hanger flange 38, thus enabling the condensing lens 40 to be coupled to the hanger flange 38.

Further, in order to filter out dispersed impure light while maintaining stable installation of the condensing lens 40 between the paired prisms 35, a lens holder 45 is installed.

The lens holder 45 has a seating recess 46 formed to accommodate the condensing lens 40 therein, and an impure light interception hole 47 is formed in a portion of the seating recess 46 to filter out impure light.

The condensing lens 40 is installed such that it is spaced apart from the impure light interception hole 47 by a predetermined distance when the condensing lens 40 is installed in the lens holder 45.

The reason for this is that, when the distance between the condensing lens 40 and the impure light interception hole 47 is excessively short during a procedure in which light, passed through the condensing lens 40, passes through the impure light interception hole 47, impure light cannot be efficiently intercepted by the impure light interception hole 47.

In this way, when the condensing lens 40 is installed between the paired prisms 35 after being coupled to the lens holder 45, light reflected from an appendage is refracted through the inverted triangular prism 35a, sequentially passes through the condensing lens 40 and the impure light interception hole 47 of the lens holder 45, is perpendicularly refracted by the triangular prism 35b placed in the traveling direction of light, and is then provided to the image sensor 60.

The image sensor 60 capture the provided light about 2000 to 2500 times per second, calculates the captured light as displacement values, and transmits the displacement values to a microcomputer of the mobile terminal or the like, which is not shown in the drawings.

Further, the holder 10 is coupled to a housing 80 provided with a cover plate 75 that comes into contact with the appendage of the user.

The operation of the optical pointing device according to this embodiment of the present invention, having the above construction, is described below.

When the appendage of the user comes into contact with the cover plate 75 of the housing 80, light emitted from the light emitting means passes through the cover plate 75, collides with the appendage, and then travels in a direction perpendicular to the appendage.

The light traveling in the vertical direction is refracted through the inverted triangular prism 35a, so that the direction of the optical path of the light is changed from the vertical direction to the horizontal direction.

The light refracted in this way is further condensed while passing through the condensing lens 40, and then passes through the impure light interception hole 47 of the lens holder in a condensed state.

In this case, of the light passing through the condensing lens 40, light beams that cannot be satisfactorily condensed, that is, impure light beams, are intercepted by the impure light interception hole 47, and are prevented from traveling to the triangular prism 35b of the paired prisms 35.

Further, the stable arrangement of the condensing lens 40 is maintained by the lens holder 45, thus preventing the performance of the condensing lens 40 from being deteriorated due to the free movement of the condensing lens 40 even if external impacts are applied during the transmission of light.

Thereafter, the light passed through the impure light interception hole 47 is refracted through the rectangular prism 35b in a vertical direction, and then travels to the image sensor 60.

The image sensor 60 captures provided light, calculates the captured light as displacement values, and transmits the displacement values to the microcomputer of the mobile terminal or the like.

As described above, when the paired prisms 35 are installed in the holder 10, respective prisms 35a and 35b are integrated into a single structure through the hanger flange 38, thus improving the assembly efficiency thereof.

Further, the lens holder 45, installed between the paired prisms 35, holds and maintains the condensing lens 40 more firmly, and thus the problem of the movement of an optical path can be prevented even if external impacts are applied.

### <Second embodiment>

Hereinafter, another embodiment of the present invention is described in detail with reference to the attached drawings.

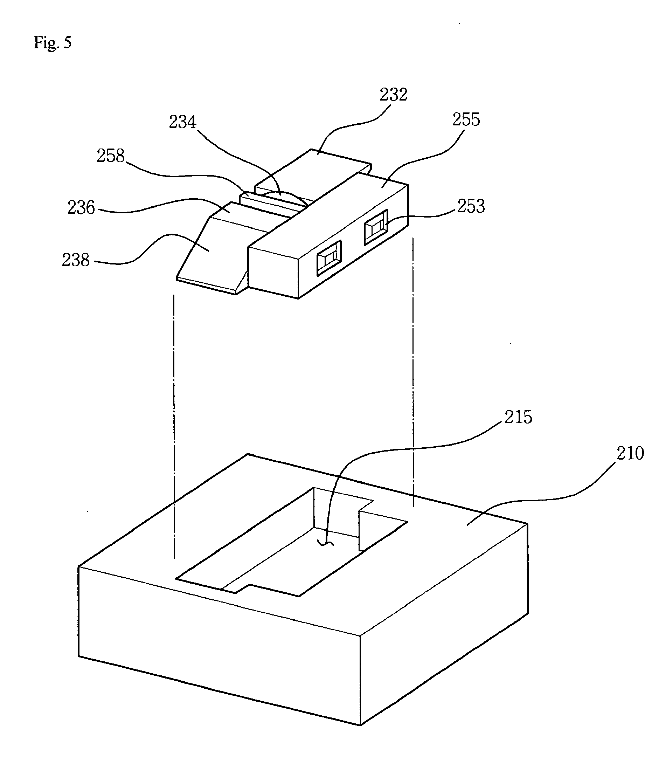

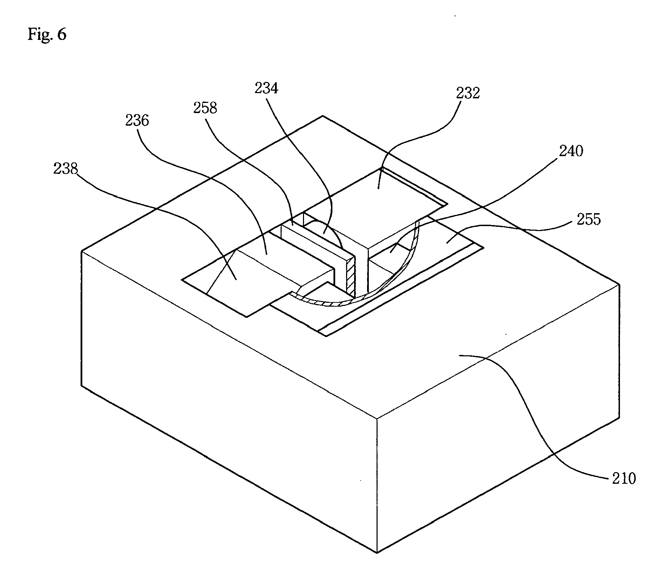

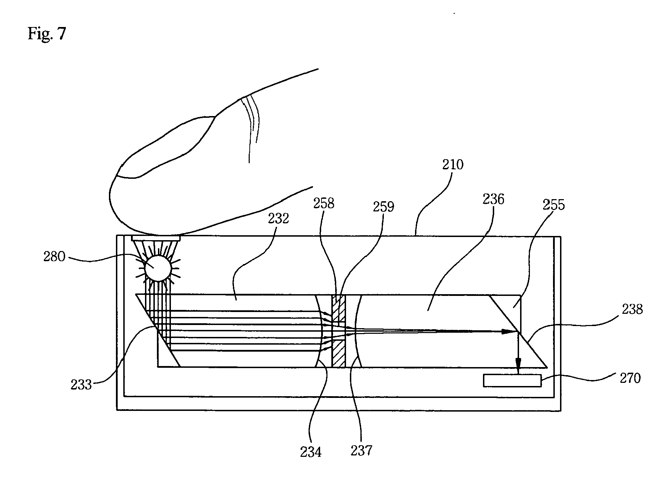

FIG. 4 is an exploded perspective view showing the state in which a condensing element is detached from a stop holder, in the construction of an optical pointing device according to another embodiment of the present invention, FIG. 5 is a perspective view showing the state in which the condensing element of FIG. 4 is installed in a holder, FIG. 6 is a perspective view in which part of FIG. 5 is cut away, and FIG. 7 is a schematic sectional view of the optical pointing device according to this embodiment of the present invention.

As shown in FIGS. 4 to 7, the optical pointing device according to another embodiment of the present invention includes a holder 210 having an accommodation space therein, a light emitting means 280 accommodated in the holder 210, a condensing element 230 for condensing light emitted from the light emitting means 280, an image sensor 270 for capturing light transmitted from the condensing element 230, and a stop holder 250 installed in the holder 210, with the stop holder 250 coupled to the condensing element 230.

The holder 210 is made of material that is lightweight and can be easily molded, such as synthetic resin. Such a holder 210 may be composed of an upper cap that comes into contact with an appendage (a user's finger or the like), and a lower cap. In the present invention, a description of the upper cap is omitted, and the lower cap is referred to as the holder in the present specification.

The holder 210 has an accommodation depression 215 formed therein to respectively accommodate the light emitting means 280, the condensing element 230, the stop holder 250, and the image sensor 270.

The light emitting means 280 can be implemented using a component, such as an LED, having a small size and excellent light radiation characteristics, but there is no need to necessarily use the LED as the illumination means.

The condensing element 230 is provided to refract vertical light, which is emitted from the light emitting means 280, is reflected from the appendage, and returns, in a horizontal direction.

This component is required to install a slim-type pointing device in a limited space when the pointing device is installed in the mobile terminal. For this operation, the condensing element 230 of the present invention can include a first waveguide 232 and a second waveguide 236.

Both the first waveguide 232 and the second waveguide 236 are made of transparent glass or synthetic resin, and are installed in the holder 210 opposite each other.

The first waveguide 232 has a first inclined surface 233 formed on one side thereof, and has a first lens part 234 formed on the other side thereof. The first inclined surface 233 of the first waveguide maintains the inclination angle required to refract light, which is incident in the vertical direction, in a horizontal direction.

The light refracted through the first inclined surface 233 is condensed while passing through the first lens part 234, and is then provided to the second waveguide 236.

The second waveguide 236 is formed to have the same shape as the first waveguide 232, and is installed opposite the first waveguide 232 and spaced apart from the first waveguide 232.

The second waveguide 236 includes a second lens part 237 opposite the first lens part 234 of the first waveguide 232, and a second inclined surface 238 formed on the surface opposite the second lens part 237.

Further, flanges 240 and 241 are formed on the outer surfaces of the first waveguide and the second waveguide, respectively. Each of the flanges 240 and 241 can be formed to protrude, as in the case of a protrusion, or can be alternatively formed in one of various pillar shapes, such as semicircular and rectangular pillar shapes.

After light passes through the first lens part 234 of the first waveguide, it is further condensed while passing through the second lens part 237 of the second waveguide, and is provided to the image sensor 270 through the second inclined surface 238 in a condensed state.

When the first waveguide 232 and the second waveguide 236 are installed in the holder 210, one of them has a small surface in contact with the inner surface of the holder 210 because the first waveguide 232 and the second waveguide 236 have very small sizes, and thus the stable installation of the waveguides cannot be maintained in the holder 210.

Therefore, in order to maintain the stable installation of the first and second waveguides 232 and 236 even when external impacts are applied to the holder 210, the first waveguide 232 and the second waveguide 236 are preferably installed in the holder 210 after being coupled to the stop holder 250.

Further, it is preferable that, in a portion at which the first waveguide 232 and the second waveguide 236 are coupled to the stop holder, a firmer coupling be maintained through adhesive processing, such as bonding, thermal bonding, or epoxy bonding.

The stop holder 250 may include a connecting member 255 provided with a pair of holes into which the flanges 240 and 241 of the first and second waveguides 232 and 236 are to be inserted, and a stop member 258 formed to perpendicularly protrude from the center portion of the connecting member255.

The connecting member 255 generally has the same width or thickness as the first and second waveguides 232 and 236, and can be formed in the shape of a bar or a pole.

Further, the stop member 258 is disposed between the first and second lens parts 234 and 237 of the first and second waveguides, and has an interception hole 259 formed on the line parallel to the optical axis of the lens parts 234 and 237 in order to allow light to travel through the center portions of the first and second lens parts 234 and 237.

The interception hole 259 functions to intercept dispersed noise light beams in order to prevent the dispersed noise light beams from influencing the second waveguide 236 during the procedure in which light travels to the second waveguide 236 through the first waveguide 232.

If the condensing element 230 is seated in the accommodation depression 215 of the holder after being coupled to the stop holder 250 in this way, light that has passed through the first and second waveguides 232 and 236 is transmitted to the image sensor 270.

The image sensor 270 can be installed above or below the second waveguide 236, and captures light, which is refracted and is incident through the second waveguide 236, 1300 to 1500 times per second.

The light captured by the image sensor 270 is calculated as coordinate values, and the coordinate values are transmitted to the microcomputers of various types of mobile terminals and are displayed on the display screens thereof.

The operation of the optical pointing device for mobile terminals according to this embodiment, having the above construction, is described below.

When the condensing element is coupled to the stop holder by inserting the flanges 240 and 241 of the condensing element into the holes 253 of the stop holder, and the coupled structure is then installed in the accommodation depression 215 of the holder 210, the condensing element 230 is held by the stop holder 250 and does not move freely within the holder 210 even when external impacts are applied.

In this state, when an appendage of the user comes into contact with the holder 210, light emitted from the light emitting means 280 is reflected from the appendage, and subsequently travels to the first waveguide 232 of the condensing element.

Light that has traveled to the first waveguide 232 is refracted at the first inclined surface 233 and travels to the second waveguide 236 through the first lens part 234.

In this case, light from the first waveguide 232 is transmitted to the second waveguide 236 while being dispersed to some degree, without being fully condensed by the first waveguide 232. During this procedure, the interception hole 259 of the stop member 258 is formed at a location collinear with the center portions of the first and second lens parts 234 and 23, thus filtering out dispersed noise light incident on the second waveguide to some degree.

The light that is not intercepted by the interception hole 259 of the stop member 258 is transmitted to the second inclined surface 238 through the second lens part 237 of the second waveguide 236, and the second inclined surface 238 refracts the received light toward the image sensor 270.

The image sensor 270 captures the light, provided through the above process, calculates the captured light as displacement values, and transmits the displacement values to the microcomputer (not shown) of the mobile terminal or the like.

The image sensor 270 is installed to be connected to separate hardware, and thus can independently perform a function similar to that of the microcomputer of the mobile terminal.

That is, the image sensor 270 is installed to be connected to separate hardware, so that information, such as displacement values output from the image sensor 270, can be directly provided to the display unit of the mobile terminal or the like, and thus a pointer can be controlled.

### <Third embodiment>

Hereinafter, a further embodiment of the present invention is described with reference to the attached drawings.

This embodiment is constructed to implement a condensing lens in various shapes.

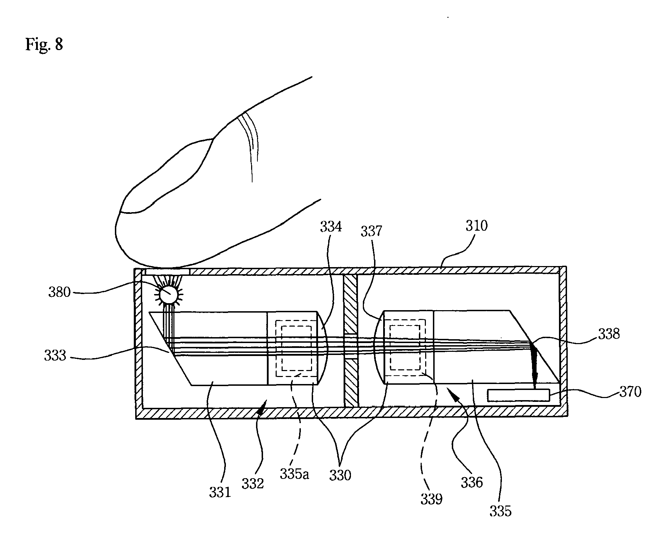

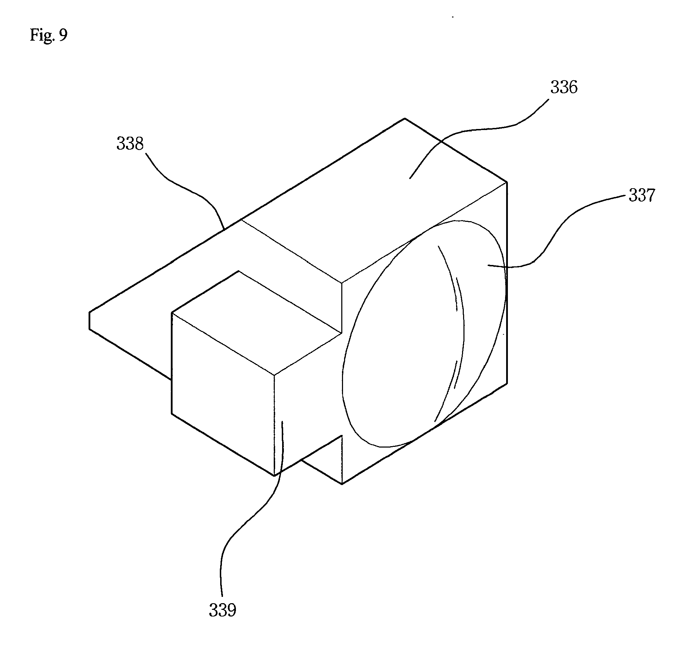

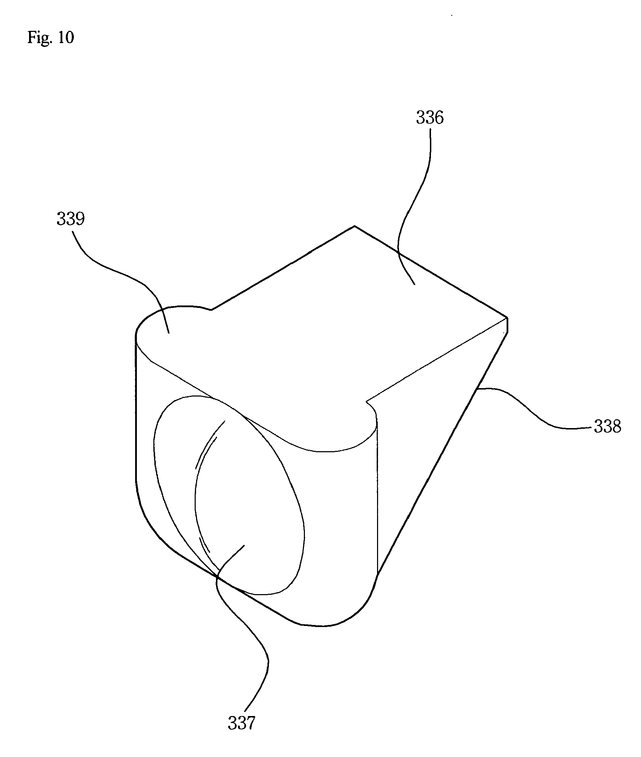

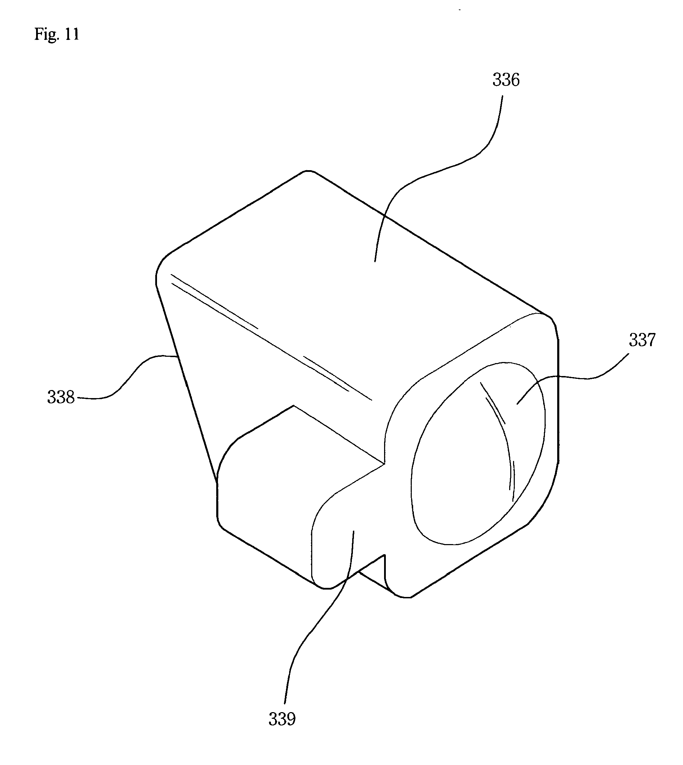

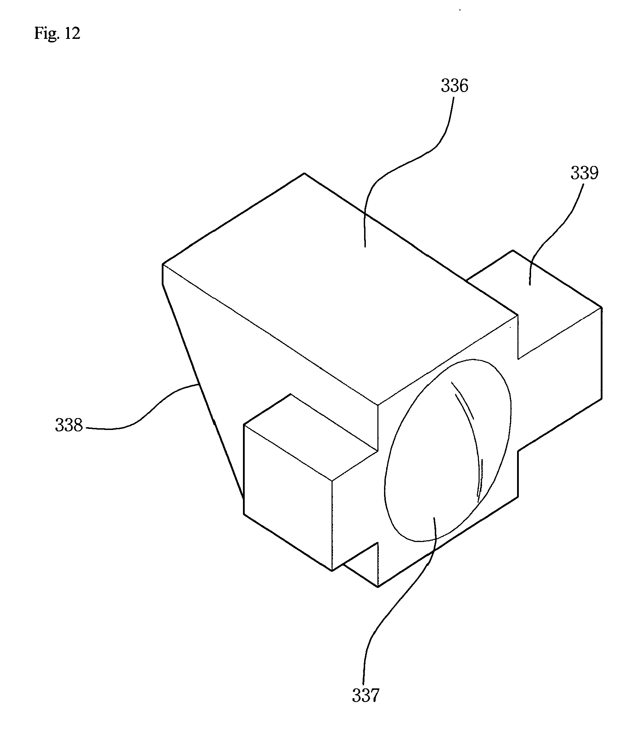

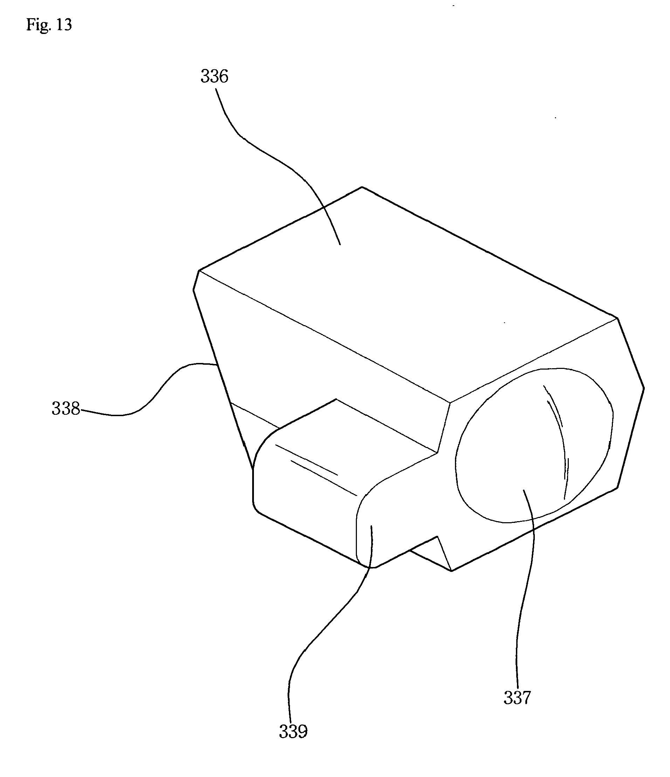

FIG. 8 is a schematic sectional view of an optical pointing device according to a further embodiment of the present invention, and FIGS. 9 to 13 are views showing various embodiments of a condensing lens.

As shown in FIG. 8, an optical pointing device according to a further embodiment of the present invention includes a holder having an accommodation space, a light emitting means installed in the accommodation space of the holder, a condensing element for condensing light emitted from the light emitting means, and an image sensor for receiving light from the condensing element.

The overall shape of the holder 310 is determined according to the design structure of the I-key of a mobile terminal, and the holder 310 has therein the accommodation space in which the light emitting means, the condensing element, etc. are to be installed.

The holder 310 can be made of material that is lightweight and can be easily molded, such as synthetic resin. The holder 310 can be composed of an upper cap, which comes into contact with an appendage, and a lower cap. In the present invention, the lower cap is referred to as the holder 310 in the following description.

The shape of the accommodation space can be formed to match the shape of a standardized LED lens used as the light emitting means 380. When an illumination means such as a backlight is used instead of the LED, the shape of the accommodation space is determined to match the standard shape of the backlight.

Further, the condensing element 330 mounted in the accommodation space is provided to condense light, which is emitted from the light emitting means, collides with an appendage (a user's finger or the like), and returns to the condensing element 330. The condensing element 330 can be made of transparent synthetic resin or glass material.

The condensing element 330 may include a first waveguide 332 having a body 331, a first inclined surface 333, a first lens part 334, and a flange 335a, and a second waveguide 336 having a body 335, a second inclined surface 338, a second lens part 337, and a flange 339.

The first waveguide 332 and the second waveguide 336 can be formed to have the same overall shape, or can be formed to have different overall shapes and forms according to the design.

As shown in FIGS. 9 to 13, each of the bodies 331 and 335 can be made of synthetic resin or glass material having high light transmissivity for the light emitting means 380 and having low brittleness. The overall shape of each of the bodies 331 and 335 can be implemented using anyone of rectangular, circular and polygonal pillar shapes.

Each of the bodies 331 and 335 is manufactured to correspond to the shape of the accommodation space of the holder, and respective corners thereof can be processed to be rounded or chamfered so as to improve assembly efficiency.

Further, on the first surfaces of the bodies 331 and 335, first and second inclined surfaces 333 and 338 are formed, respectively. The angles of the first and second inclined surfaces 333 and 338 can be set according to the location of the appendage coming into contact with the holder 310 and the location of an image sensor 370, respectively.

In the present invention, since the appendage is vertically placed above the first waveguide 332, and the image sensor 370 is placed below the second waveguide 336, the angles of the inclined surfaces are set to 45°.

The reason for this is to refract vertical light, emitted from the light emitting means 380 and collided with the appendage, in a horizontal direction when the optical pointing device is mounted in the mobile terminal or the like.

The first and second convex lens parts 334 and 337 are formed on the second surfaces of the first and second bodies 331 and 335 to be integrated with the second surfaces. The first and second lens parts 334 and 337 function to condense light refracted through respective inclined surfaces.

Further, on the surfaces to which the first and second inclined surfaces 333 and 338 and the first and second lens parts 334 and 337 of the bodies 331 and 335 are arranged at a right angle, flanges 335a and 339 are respectively formed to protrude from the surfaces. The flanges 335a and 339 are formed to maintain the stable installation of the condensing element 330 even when external impacts are applied after the condensing element 330 has been installed in the accommodation space of the holder.

Each of the flanges 335a and 339 can be formed on either or both of the opposite surfaces of the body 331 or 335. Each of the flanges 335a and 339 can be implemented in any one of various shapes, such as rectangular, circular, semicircular and polygonal shapes, in order to improve the assembly efficiency when the flanges 335a and 339 are seated in the accommodation space of the holder.

In the accommodation space of the holder 310, recesses (not shown) corresponding to the flanges 335a and 339 are formed. The recesses can be processed according to the number and shape of flanges.

The condensing element 330 is installed in the accommodation space of the holder 310 so that the first waveguide 332 and the second waveguide 336 are arranged opposite each other. The first and second waveguides are installed to be spaced apart from each other by a predetermined distance in consideration of the distance over which light is condensed through the first and second lens parts 334 and 337.

Meanwhile, the image sensor 370 is installed below or above the condensing element 330 installed in the holder 310. The image sensor 370 can be installed above or below the second waveguide 336 installed in the accommodation space, and can capture light provided by the second waveguide 336 to sense the movement of an appendage.

The image sensor 370 captures light, which is refracted through the second waveguide 336 and is incident thereon, 1300 to 1500 times per second.

The light captured by the image sensor 370 is calculated as coordinate values, and the coordinate values are transmitted to the microcomputers of various mobile terminals and are displayed on the display screens thereof, although this is not shown in detail in the drawings.

The operation of the optical pointing device according to this embodiment of the present invention is described below.

When a user aligns the first and second waveguides 332 and 336 with the accommodation space of the holder while holding the bodies 331 and 335 of the first and second waveguides 332 are 336 using a separate tool, such as a pair of tweezers, the condensing element 330 is installed in the holder 310 in such a way that the first and second waveguides 332 and 336 are inserted into the recesses to thus fit the flanges 335a and 339 thereof into the recesses.

When the flanges 335a and 339 are fitted into the recesses, the condensing element 330 softly slides along the inner wall surface of the accommodation space because the corners of the condensing element 330 are processed to be chamfered or rounded.

When the condensing element 330 is installed in the accommodation space of the holder 310, the stable installation of the condensing element can be maintained by the flanges 335a and 339 fitted into the recesses, even when external impacts are applied to the holder 310.

Meanwhile, when the user brings the appendage into contact with the holder 310 after the condensing element 330 is installed in the accommodation space of the holder, light emitted from the light emitting means 380 is reflected from the appendage and is then incident on the first inclined surface 333 of the first waveguide.

The light incident on the first inclined surface 333 of the first waveguide is condensed through the first lens part 334 while forming a right angle, and travels to the second lens part 337 of the second waveguide.

After light travels to the second lens part 337, light is further condensed at the second inclined surface 338 to some degree, and the condensed light is transmitted from the second inclined surface 338 to the image sensor 370.

The image sensor 370 captures the light, refracted from and provided by the second inclined surface 338, calculates the motion of the appendage as displacement values, and transmits the displacement values to the microcomputer of the mobile terminal or the like.

As described above, the present invention provides an optical pointing device for mobile terminals, which is advantageous in that the assembly structure of a condensing element for condensing light is improved, so that the arrangement of the condensing element, which is robust to external impacts, can be maintained, thus improving the durability of the optical pointing device.

Further, the present invention is advantageous in that the condensing element can be more easily installed even using a separate tool, thus greatly improving work efficiency and assembly efficiency.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. An optical pointing device for mobile terminals, including:
a holder having an accommodation opening therein;
light emitting means installed in the accommodation opening of the holder;
a condensing element including a pair of prisms installed in the accommodation opening of the holder and integrated into a single structure so as to condense light emitted from the light emitting means, and a condensing lens disposed between the paired prisms;
and an image sensor for capturing light provided through the condensing element and calculating the captured light as displacement values,
**characterized in that**
the condensing element comprises a lens holder coupled to the condensing lens so as to maintain stable installation of the condensing lens between the paired prisms.

2. The optical pointing device according to claim 1, **characterized in that** the lens holder comprises a seating depression to enable the condensing lens to be fitted thereto, and an impure light interception hole formed in a portion of the seating depression and adapted to filter out impure light from light passing through the condensing lens.

3. The optical pointing device according to claim 1, **characterized in that** the paired prisms are integrated into a single structure through a hanger flange.

4. The optical pointing device according to claim 1, **characterized in that** the paired prisms have same shape and form, are spaced apart from each other, and are formed to have downwardly inclined surfaces that face away from each other.

5. The optical pointing device according to claim 1, **characterized in that** the holder comprises at least one stop protrusion formed on an innerwall of the accommodation opening of the holder so as to prevent the light emitting means and the condensing element from becoming detached from the holder.

6. An optical pointing device for mobile terminals, including:
a holder having an accommodation depression therein;
light emitting means installed in the accommodation depression of the holder;
a condensing element for condensing light emitted from the light emitting means;
an image sensor for capturing light transmitted through the condensing element and calculating the captured light as displacement values; and
a stop holder installed in the holder after being coupled to the condensing element, the stop holder limiting free movement of the condensing element in the holder,
**characterized in that**
the stop holder comprises a connecting member having a pair of holes formed therein, and a stop member formed to protrude from a center portion of the connecting member and provided with an interception hole for intercepting dispersed noise light while holding the paired lenses.

7. The optical pointing device according to claim 6, **characterized in that** the condensing element is a pair of lenses arranged opposite each other, and flanges are formed on circumferences of the lenses to be fitted into the holes of the stop holder.

8. An optical pointing device for mobile terminals, including:
a holder having an accommodation space therein;
light emitting means installed in the accommodation space of the holder;
a condensing element for condensing light emitted from the light emitting means; and
an image sensor for capturing light transmitted through the condensing element and calculating the captured light as displacement values,
**characterized in that**
the condensing element comprises at least one body, at least one inclined surface formed on the body to refract light emitted from the light emitting means, at least one lens for condensing light, refracted through the inclined surface, and at least one flange formed on an outer surface of the body.

9. The optical pointing device according to claim 8, **characterized in that** the condensing element is made of transparent material, and includes a plurality of elements, each element being constructed such that an inclined surface is formed on one side of a body, a lens is formed on a side opposite the inclined surface, and a flange is formed on a surface, to which the inclined surface and the lens are arranged at a right angle, to protrude from the surface.

10. The optical pointing device according to claim 8, **characterized in that** the condensing element is made of transparent material, and is constructed such that inclined surfaces are formed on opposite sides of a body, lenses are formed between the inclined surfaces, and flanges are formed on surfaces, to which the inclined surfaces and the lenses are arranged at a right angle, to protrude from the surfaces.

11. The optical pointing device according to claim 8, **characterized in that** the flange is formed in any one of triangular, rectangular, polygonal, and circular pillar shapes.

12. The optical pointing device according to claim 8, **characterized in that** the accommodation space of the holder comprises a recess formed to correspond to the flange.

13. The optical pointing device according to claim 8, **characterized in that** the body of the condensing element is formed in any one of rectangular, circular and polygonal pillar shapes.

14. The optical pointing device according to anyone of claims 8 to 10, **characterized in that** the flanges are formed on opposite sides of the body to protrude from the opposite sides.

15. The optical pointing device according to claim 14, **characterized in that** the accommodation space of the holder comprises slide grooves formed therein to allow flanges, respectively formed on the opposite sides of the body to protrude from the sides, to be fitted into the slide grooves.
